(19) **Europäisches Patentamt**

**European Patent Office**

**Office européen des brevets**

(11) **EP 1 405 776 A1**

(12) **EUROPEAN PATENT APPLICATION**

(43) Date of publication:
07.04.2004 Bulletin 2004/15

(51) Int Cl.⁷: **B60R 21/32**, B60Q 1/48

(21) Application number: 03021999.2

(22) Date of filing: 30.09.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.09.2002 JP 2002284673**

(71) Applicant: **Aisin Seiki Kabushiki Kaisha**
**Kariya-shi, Aichi-ken (JP)**

(72) Inventors:
• **Kakinami, Toshiaki**
**Nagoya-shi Aichi-ken (JP)**
• **Yamamoto, Shuji**
**Toyota-shi Aichi-ken (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **Movable body circumstance monitoring apparatus**

(57)     A movable body circumstance monitoring apparatus includes first and second environment information detecting means for detecting and storing information about an environment surrounding a movable body, movable body information detecting means for detecting and storing position and posture of the movable body, first and second information combining means for combining the information detected by the movable body information detecting means and the information detected by the first and second environment information detecting means, correcting a positional and postural relationship of the movable body relative to the environment surrounding the movable body, and outputting the relationship, first and second specific view creating means for creating a first specific view of the movable body with reference to information of an environment surrounding the movable body at a first specific position based upon the information outputted from the first and second information combining means, first and second displaying means for displaying the first and second specific view created by the first and second specific view creating means as images, and display adjusting means for adjusting at least a portion of the second specific view displayed by the second displaying means to overlap the first specific view displayed by the first displaying means.

FIG. 1

**Description**

**FIELD OF THE INVENTION**

This invention generally relates to a movable body circumstance monitoring apparatus optimized for monitoring circumstance of a movable body. More particularly, this invention pertains to a movable body circumstance monitoring apparatus optimized for monitoring an environment around the movable body and displaying an image of a view from the movable body positioned at an intended position. For example, the movable body circumstance monitoring apparatus is preferably utilized for monitoring an environment around a vehicle as the movable body and for displaying an object or an obstacle at a time like vehicle parking, when needed

**BACKGROUND OF THE INVENTION**

In order to achieve minimization of a blind corner behind a vehicle, various types of apparatus for monitoring an environment behind the vehicle have been disclosed and further commercially offered in the markets. For example, one of the apparatus is provided with a camera at a vehicle rear side, which monitors the environment behind the vehicle, and a monitor set up near a driver's seat, which displays an image of the environment behind the vehicle captured by the camera.

For example, disclosed is an aid system for garaging an automobile in a Japanese Patent Laid-open published as No. 1987-278477 (Patent document 1). The aid system for garaging an automobile includes a computer for calculating an automobile driving track based upon signals outputted from a distance sensor and a steering wheel angle sensor. When the computer judges that a distance between the automobile on an expected driving track and an obstacle around the automobile is less than a predetermined distance, a user (mainly the driver) can be auditorily alerted by an alarm.

As another example, disclosed is a rear sight display unit for a vehicle in a Japanese Patent Laid-open published as No. 1989-141137 (Patent document 2). The rear sight display unit for the vehicle includes obstacle detecting sensors set at front left and front right portions of the vehicle for detecting the vehicle front sides approaching to obstacles. The detected information is displayed with the rear sight in a monitor window at the same time. Therefore, the vehicle backward operation by the driver can be performed without causing the vehicle front left and front right portions to become in contact with the obstacles even if the driver's visual line is not shifted from the monitor window to the vehicle forward.

As a further example, disclosed is a parking support system in a Japanese Patent Laid-open published as No. 2001-187553 (Patent document 3). The parking support system includes a single camera for photographing surroundings of a moving vehicle at first and second points, an imaging unit for converting the surroundings of the moving vehicle into first and second images which are produced in time series, a stereoscopic object-specifying unit for detecting and specifying a stereoscopic object in each image, a vehicle position calculating unit for calculating a vehicle moving data from the first point to the second point, and a stereoscopic object distance calculating unit for calculating a distance between the vehicle and the stereoscopic object based upon the positions of the stereoscopic object in the first and second images and the vehicle moving data. The parking support system including the above structure generates a third image for instructing the driver based upon the images by the imaging unit and the distance between the vehicle and the stereoscopic object calculated by the stereoscopic object distance calculating unit. Therefore, an accurate distance between the vehicle and the stereoscopic object can be calculated in accordance with principles of triangulation modes with the stereoscopic object in the first and second images.

As a still further example, disclosed is a relative position detection device and a parking auxiliary apparatus furnished with the relative position detection device in a Japanese Patent Laid-open published as No. 2002-052999 (Patent document 4). According to the disclosure, an own vehicle stop position marker and a lateral direction gauging marker are superposed and displayed in a monitor window. Therefore, a position of the own vehicle relative to a reference object can be detected by use of the camera image and a general steering wheel angle sensor without using a gauge sensor. In this publication, the own vehicle stop position marker is defined as a marker for stopping the own vehicle in a positional relation that the own vehicle and the reference object are positioned possessing a predetermined orientation. The lateral direction gauging marker is defined as a marker for gauging a lateral distance between the own vehicle and the reference object in response to a vehicle moving amount in the monitor window.

In the meantime, a conventional technique has been widely known in an image processing technical field, which reconstructs a three-dimensional (3D) shape by use of two cameras. For example, a thesis "Solve a Stereophonic mechanism" (Nonpatent document 1) by Koichiro Deguchi in a publication entitled "Information Processing" (date of publication of vol. 37 No. 7: July, 1996) describes gauging a stereoscopic object by a stereo. According to the disclosure in the thesis, a position of each corresponding point in the space can be determined based upon features of the respective images shot by the two cameras (e.g. focal lengths of the two camera lenses, image centers thereof, pixel size thereof, and so on), positions and postures of the two cameras, and a corresponding of the two images.

Likewise, according to a column "Three-dimensional shape reconstruction by a stereo vision" (Nonpatent document 2) at pages 161 and 162 in a publication entitled "Mathematics of Spatial data" (date of publication of the first edition: March 10, 1995, publishing office: Asakura, Inc., author: KANATANI, Kenichi), a stereo vision is defined as a method of calculating a three-dimensional shape of a substance in accordance with principles of triangulation modes based upon a corresponding relation between the images shot by two cameras. The stereo vision is further defined as one of the most fundamental methods of extracting a three-dimensional information from images so as to be used for a robot control.

Further, according to another thesis "3. Manipulation of Videos" (Nonpatent document 3) by Koichiro Deguchi in the publication entitled "Information Processing" (date of publication of vol. 37 No. 8:August, 1996), a three-dimensional shape of an object in a video can be reconstructed in accordance with the same principles of the aforementioned stereo. Especially, when the video is produced with sequential images, the motion of the object can be tracked. Therefore, the video is considered to be more preferable than only two images in this regard for extracting corresponding points.

According to the above-described four patent documents, the view at a rear side of the vehicle can be photographed by the camera and be displayed in the monitor. Therefore, the vehicle can be moved rearward or parked observing the obstacle behind the vehicle displayed in the monitor. However, the environment around the vehicle corner is out of the view shot by the camera such that the environment can not be displayed in the monitor. In this case, when the vehicle is moved rearward while turning for example, the driver can not recognize whether or not there is a sufficient distance between a turning inside of the own vehicle corner and an obstacle such as the other vehicle.

In order to overcome the above drawback, a camera possessing an appropriate camera angle can be projected from the vehicle so as to capture the corner portion of the own vehicle in the camera shot view. However, this type of arrangement of the camera on the vehicle may spoil a vehicle design, thereby not being appropriate for all types of vehicles. As the other method to overcome the above drawback, the camera can be mounted near the vehicle corner. However, it is considered to be difficult because a lighting unit is usually disposed around the vehicle corner. For example, when the camera is assembled in the lighting unit, the camera is required to be sufficiently heat-resistant or a surface cover of the lighting unit is required to be made of optical materials for the camera such that image quality is not spoiled. In this case, technical and cost problems still remain. Even if the camera can be assembled in the lighting unit, the road immediately below a vehicle bumper may not be able to be captured by the camera due to a projected portion of the vehicle bumper.

In light of foregoing, recent demands have lead to an apparatus capable of displaying an image of a vehicle corner or around, which does not appear in the view captured by the camera, without spoiling the vehicle design. However, it seems to be difficult to overcome the above-described drawback only from an aspect of the camera arrangement.

In the meantime, according to the image processing method disclosed in the above nonpatent documents, a three-dimensional shape of an obstacle can be restored by use of a single camera. Therefore, if this type of image processing method can be appropriately applied to an apparatus for monitoring an environment around a movable body such as a vehicle, an image encompassing a substance such as an obstacle shot by the camera can be stored in a memory, wherein an image can be produced in response to an own vehicle movement. However, a substance, which was not captured by the camera, can not be converted as an image. In this case, it seems to be difficult to cope with an unexpected situation that an obstacle, which had been located out of the camera view, may suddenly appear in the view.

According to the above-described Patent document 3, an image A shot while the vehicle 1 is at a position a is converted to an image as if it were shot while the vehicle 1 was at a position b, wherein an image C can be calculated. A distance between the vehicle and a stereoscopic object can be geometrically calculated based upon a deviance between the two images and the vehicle moving data. However, the Patent document 3 does not make a contribution to the above-described drawback.

A need thus exists for providing an improved movable body circumstance monitoring apparatus capable of preventing an unexpected substance from appearing in a view assured from a movable body at a desired position by use of a detecting means for detecting environment information such as a size, or a position of a substance around the movable body.

## SUMMARY OF THE INVENTION

In light of foregoing, according to an aspect of the present invention, a movable body circumstance monitoring apparatus characterized in that the apparatus includes first environment information detecting means for detecting and storing information about an environment surrounding a movable body, movable body information detecting means for detecting and storing position and posture of the movable body, first information combining means for combining the information detected by the movable body information detecting means and the information detected by the first environment information detecting means, correcting a positional and postural relationship of the movable body relative to the environment surrounding the movable body, and outputting the relationship, first specific view creating means for creating a first specific view of the movable body with reference to information of an environment surrounding the movable body at a first specific position based upon the information outputted from the first information combining means, first displaying means for displaying the first specific view created by the first specific view creating means as an image, second environment information detecting means for detecting and storing information about an environment surrounding the movable body, second information combining means for combining the information detected by the movable body information detecting means and the information detected by the second environment information detecting means, correcting a positional and postural relationship of the movable body relative to the environment surrounding the movable body, and outputting the relationship, second specific view creating means for creating a second specific view of the movable body with reference to information of an environment surrounding the movable body at a second specific position based upon the information outputted from the second information combining means, second displaying means for displaying the second specific view created by the second specific view creating means as an image, and display adjusting means for adjusting at least a portion of the second specific view displayed by the second displaying means to overlap the first specific view displayed by the first displaying means. The information about the environment surrounding the movable body includes a size, position and so on of a substance around the movable body. The movable body includes a vehicle, a movable robot, and the like. The portion of the second specific view does not overlap the first specific view prior to being adjusted by the display adjusting means.

The first and second environment information detecting means respectively include image capturing means mounted on the movable body for obtaining images of the surrounding of the movable body and for outputting information of an image, the image capturing means obtaining a first image at least at a first state of the movable body and obtaining a second image at least at a second state thereof when the movable body move from the first state to the second state, feature point tracking means for detecting a coordinate of a feature point in the first image at the first state of the movable body and for detecting a coordinate, which corresponds to the feature point, in the second image at the second state thereof, moving condition detecting means for detecting the position and posture of the movable body at least at the first and second states, and three-dimensional coordinate estimating means for estimating a three-dimensional coordinate of the feature point based upon the position and posture of the movable body at the first and second states detected by the moving condition detecting means, the coordinate of the feature point in the image at the first state of the movable body, and the coordinate, which corresponds to the feature point, in the image shot at the second state.

The moving condition detecting means of each first and second environment information detecting means detects the position and posture of the movable body at the fist and second states based upon the information detected by the movable body information detecting means.

According to another aspect of the present invention, the movable body circumstance monitoring apparatus characterized in that the apparatus includes first environment information detecting means for detecting and storing information about an environment surrounding a movable body, movable body information detecting means for detecting and storing position and posture of the movable body, first information combining means for combining the information detected by the movable body information detecting means and the information detected by the first environment information detecting means, correcting a positional and postural relationship of the movable body relative to the environment surrounding the movable body, and outputting the relationship, first specific view creating means for creating a first specific view of the movable body with reference to information of an environment near a first specific portion of the movable body based upon the information outputted from the first information combining means, first displaying means for displaying the first specific view created by the first specific view creating means as an image, second environment information detecting means for detecting and storing information about an environment surrounding the movable body, second information combining means for combining the information detected by the movable body information detecting means and the information detected by the second environment information detecting means, correcting a positional and postural relationship of the movable body relative to the environment surrounding the movable body, and outputting the relationship, second specific view creating means for creating a second specific view of the movable body with reference to information of an environment near a second specific portion of the movable body based upon the information outputted from the second information combining means, second displaying means for displaying the second specific view created by the second specific view creating means s an image, and display adjusting means for adjusting at least a portion of the second specific view displayed by the second displaying means to overlap the first specific view displayed by the first displaying means.

## BRIEF DESCRIPTION OF THE DRAWING FIGURES

The foregoing and additional features and characteristics of the present invention will become more apparent from the following detailed description considered with reference to the accompanying drawing figures wherein:

FIG. 1 is a block diagram illustrating a structure of a movable body circumstance monitoring apparatus according to an embodiment of the present invention;

FIG. 2 is a perspective view illustrating a vehicle mounting the movable body circumstance monitoring apparatus as a parking guide system according to the embodiment of the present invention;

FIG. 3 is a block diagram illustrating a structure of the parking guide system according to the embodiment of the present invention;

FIG. 4 is a plan view illustrating a vehicle model according to the embodiment of the present invention;

FIG. 5 is a plan view illustrating an example of a method of detecting and tracking a positional coordinate of the movable body and a direction thereof after moving with reference to a positional coordinate of the vehicle and the direction thereof at a movement starting position in a predetermined three-dimensional coordinate according to the embodiment of the present invention;

FIG. 6 is a plan view illustrating an example of a condition specifying positional coordinate and posture of the vehicle in a third-dimensional map according to the embodiment of the present invention;

FIG. 7 is a plan view illustrating a displayed view shot by a virtual camera arranged at a rear portion of the vehicle according to the embodiment of the present invention;

FIG. 8 is a plan view illustrating a displayed view shot by virtual cameras respectively arranged at a front left corner of the vehicle and at a rear left corner thereof according to the embodiment of the present invention;

FIG. 9 is a plan view illustrating a displayed view shot by a virtual camera arranged at a side portion of the vehicle according to the embodiment of the present invention:

FIG. 10 is a plan view illustrating a displayed view at 180 degrees shot by a virtual camera arranged at an upper rear portion of the vehicle according to the embodiment of the present invention:

FIG. 11 is a plan view illustrating a displayed view at 360 degrees shot by a virtual camera arranged above the vehicle according to the embodiment of the present invention;

FIG. 12 is a plan view exemplifying how the displayed view varies in response to rearward movement of the vehicle according to the embodiment of the present invention;

FIG. 13 is a plan view exemplifying an image showing a rear portion of the vehicle at a position denoted with double dashed lines in FIG. 12 and an obstacle around the vehicle;

FIG. 14 is a plan view exemplifying an image showing a rear portion of the vehicle at a position denoted with a solid line in FIG. 12 and the obstacle around the vehicle;

FIGS. 15 (A) and (B) are plan views exemplifying a monitor showing a touch panel switch, wherein a screen displayed in the monitor is shifted from a normal displayed screen (A) to a screen (B) which displays a zoomed image;

FIG. 16 is a plan view exemplifying a change of a displayed view in response to vehicle forward movement according to the embodiment of the present invention;

FIG. 17 is a plan view exemplifying an image showing a rear portion of the vehicle at a position denoted with double dashed lines in FIG. 16 and an obstacle around the vehicle;

FIG. 18 is a plan view exemplifying an image showing a rear portion of the vehicle at a position denoted with a solid line in FIG. 16 and an obstacle around the vehicle;

FIG. 19 is an explanatory view for explaining a geometric relationship for shooting a feature point of a substance in the space by two cameras so as to reconstruct the three-dimensional shape according to the embodiment of the present invention;

FIG. 20 is an explanatory view for exemplifying a feature point tracking so as to reconstruct the three-dimensional shape according to the embodiment of the present invention; and

FIG. 21 is an explanatory view for exemplifying a tracking so as to reconstruct the three-dimensional shape according to the embodiment of the present invention.

## DETAILED DESCRIPTION OF THE INVENTION

Preferred embodiment of the present invention will be described hereinbelow in detail with reference to the accompanying drawings.

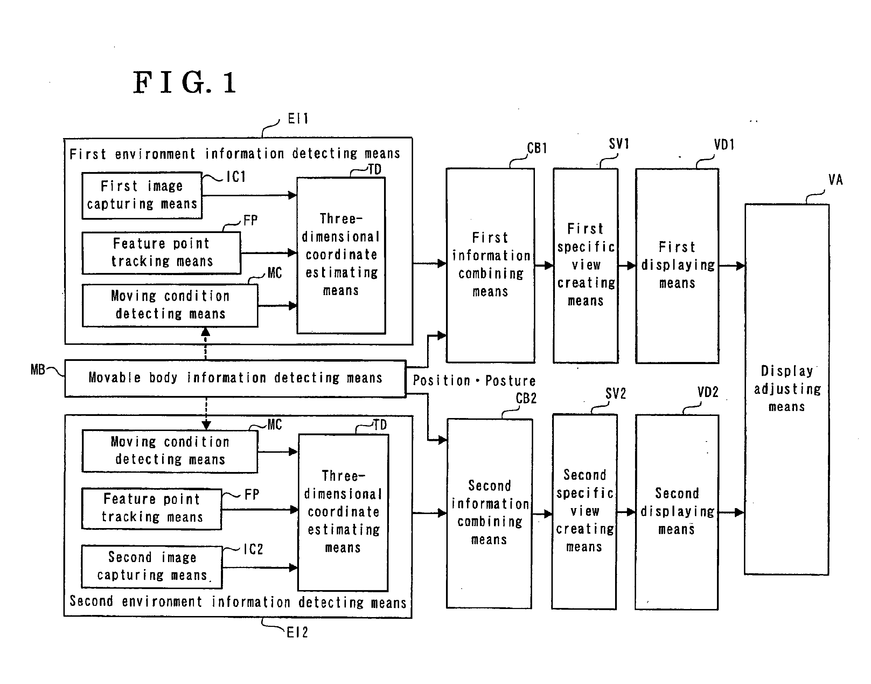

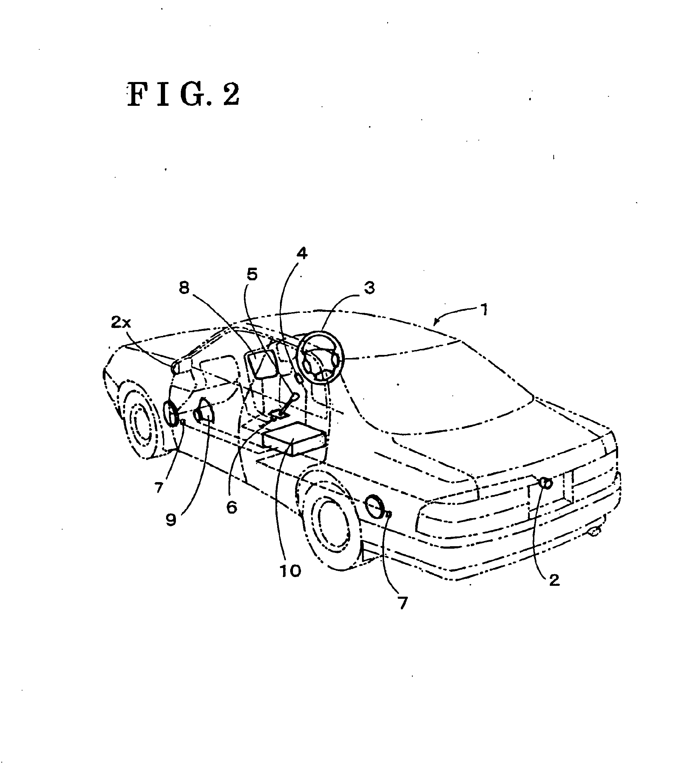

For example, a movable body circumstance monitoring apparatus according to an embodiment of the present invention is mounted on a vehicle illustrated in FIG. 2 and is applied as a parking guide system. As illustrated in FIG. 1, the movable body circumstance monitoring apparatus is provided with first and second environment information detecting means EI1 and EI2 for detecting and storing information of environment surrounding the movable body, such as size and position of an object around the movable body, and a movable body information detecting means MB for consecutively detecting and storing position and posture of the movable body. When the movable body corresponds to a vehicle, the movable body information detecting means MB can be configured with a sensor for detecting vehicle dynamic condition such as a vehicle driving speed, a vehicle steering condition, and a vehicle turning condition. According to the embodiment of the present invention, a coordinate depicting a vehicle position and an angle depicting a vehicle posture can be detected based upon at least a signal outputted from a sensor, which will be described later.

Further, the movable body circumstance monitoring apparatus is further provided with first and second information combining means CB1 and CB2, first and second specific view creating means SV1 and SV2, and first and second displaying means VD1 and VD2. The information combining means CB1 and CB2 combine the movable body information detected by the movable body information detecting means MB and the information of the environment surrounding the movable body detected by the environment information detecting means EI1 and EI2, respectively, and correct a relation of the position and posture of the movable body relative to the environment surrounding the movable body, respectively. The specific view creating means SV1 and SV2 create first and second specific views of the movable body with reference to the information of specific environments surrounding the movable body located at specific positions based upon the positional and postural relation of the movable body relative to the surrounding environment outputted from the first and second information combining means CB1 and CB2, respectively. The displaying means VD1 and VD2 display displayed images of the first and second specific views created by the first and second specific view creating means SV1 and SV2, respectively.

Still further, the movable body circumstance monitoring apparatus is provided with a display adjusting means VA for superposing and displaying at least a portion of the image of the second specific view displayed by the second displaying means VD2, which does not superpose on the image of the first specific view displayed by the first displaying means VD1, on the image displayed by the first displaying means VD1. The first and second displaying means VD1 and VD2 can be represented by a monitor (not shown) installed in the movable body. The monitor can be applied as the both first and second displaying means VD1 and VD2.

As illustrated in FIG. 1, the first and second environment information detecting means EI1 and EI2 are provided with first and second image capturing means IC1 and IC2, a feature point tracking means FP, a moving condition detecting means MC, and a three-dimensional coordinate estimating means TD, respectively. The first and second image capturing means IC1 and IC2, such as ccd cameras, are provided on the movable body for shooting the environment surrounding the movable body and output image information to the three-dimensional coordinate estimating means TD. More particularly, when the movable body moves from a first state to a second state, each image capturing means IC1 and IC2 shoots the surrounding environment at least at the first and second states of the movable body and outputs two images reflecting the surrounding environment at the respective states. The feature point tracking means FP detects a coordinate of a feature point in the image shot at the first state and also a coordinate, which corresponds to the feature point, in the image shot at the second state. The moving condition detecting means MC detects the positions and postures of the movable body at least at the first and second states, respectively. The three-dimensional coordinate estimating means TD estimates a three-dimensional coordinate of the feature point based upon the position and posture of the movable body at the first and second states detected by the moving condition detecting means MC, the coordinate of the feature point in the image shot at the first state, and the coordinate, which corresponds to the feature point, in the image shot at the second state. When the movable body corresponds to the vehicle, the moving condition detecting means MC can be configured with a sensor for detecting the vehicle dynamic condition such as a vehicle driving condition, a vehicle steering condition, and a vehicle turning condition. Alternatively, the information outputted from the movable body information detecting means MB can be referred to for the moving condition detecting means MC.

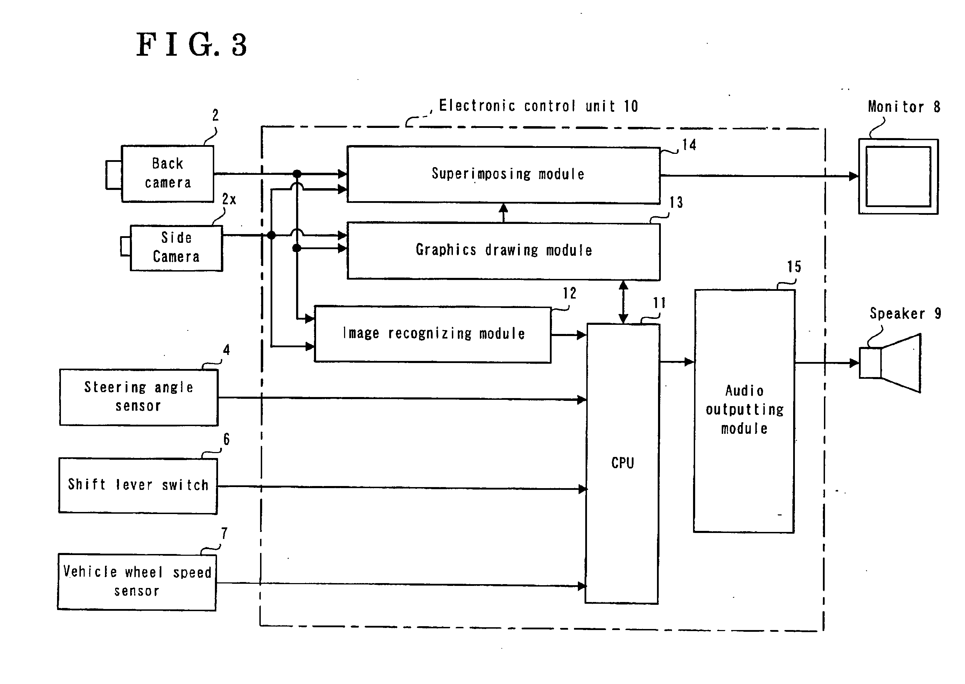

When the movable body corresponds to a vehicle, the movable body circumstance monitoring apparatus according to the embodiment of the present invention can be applied as a parking guide system illustrated in FIGS. 2 and 3. As illustrated in FIG. 2, a first camera 2 (hereinafter, referred to as a back camera 2) is mounted at a rear portion of the vehicle 1 as a non-limiting example and a second camera 2x (hereinafter, referred to as a side camera 2) is assembled at an edge portion of a door mirror of the vehicle 1 as a non-limiting example. The back camera 2 is represented for example by a ccd camera and corresponds to the first image capturing means CD1. The side camera 2x is represented for example by a ccd camera and corresponds to the second image capturing means CD2. Image information from the cameras 2 and 2x are both supplied to an electronic control unit 10.

The electronic control unit 10 is housed in a container mounted on the vehicle 1 illustrated in FIG. 2 and acts as the movable body information detecting means MB, the moving condition detecting means MC and the three-dimensional coordinate estimating means TD for each first and second environment information detecting means EI1 and EI2, the first and second information combining means CB1 and CB2, the first and second specific view creating means SV1 and SV2, and the display adjusting means VA. A steering angle sensor 4 is disposed in the vehicle 1 so as to detect a steering angle of a steering wheel 3. A shift lever switch 6 is disposed in the vehicle 1, which is turned on when a shift lever 5 is shifted to a reverse stage. The detected steering angle and the on signal are then provided to the electronic control unit 10, respectively.

Further, according to the embodiment of the present invention, vehicle wheel speed sensors 7 are mounted on respective vehicle wheels so as to detect rotational speed of the respective corresponding vehicle wheels. The detected vehicle wheel speed is supplied to the electronic control unit 10. Accordingly, a moving distance of the movable body at least between a first position and a second position can be gauged based upon the detection result of the vehicle wheel speed sensors 7. A monitor 8 is arranged at a predetermined position in the vehicle 1 and should be easily visible by the driver. The monitor 8 displays visual information for parking guiding in response to output signals from the electronic control unit 10. That is, according to the embodiment of the present invention, the monitor 8 acts as the first and second displaying means VD1 and VD2 explained in FIG. 1. Further, a speaker 9 is disposed at a predetermined position in the vehicle 1, thereby enabling to output audio information for parking guiding in response to an output signal from the electronic control unit 10.

With reference to FIG. 3, the steering angle sensor 4, the shift lever switch 6, and the vehicle wheel speed sensors 7 are connected to a CPU 11 in the electronic control unit 10 via an input interface (not shown). The monitor 8 is connected to a superimposing module 14 in the electronic control unit 10 via an output interface (not shown). The speaker 9 is connected to the CPU 11 via an audio outputting module 15. The back camera 2 and the side camera 2x are respectively connected to an image recognizing module 12, a graphics drawing module 13, and the superimposing module 14 via the input interface. The CPU 11, the image recognizing module 12, the graphics drawing module 13, a superimposing module 14, and an audio outputting module 15 are connected by bus bars, respectively. Information in each module is stored for a predetermined period of time and can be read out when needed.

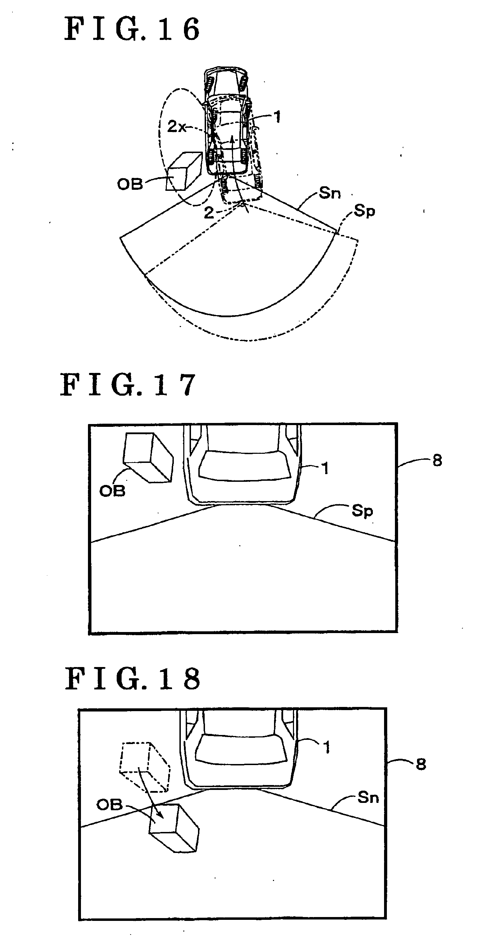

The information of the image of the environment surrounding the vehicle 1 shot by the back camera 2 and the side camera 2x are supplied to the CPU 11 for calculation via the image recognizing module 12. The signal outputted from the vehicle wheel seed sensors 7 and so on are also supplied to the CPU 11 for the calculation. The graphics drawing module 13 draws a three-dimensional graphics in response to a synchronization signal extracted from the image shot by the back camera 2 (if necessary, along with the image shot by the side camera 2x) based upon the calculated result. In the meantime, calculation is performed by the CPU 11 for the purpose of the parking assistance. A graphics based upon the calculation result is drawn by the graphics drawing module 13. The graphics drawn by the graphics drawing module 13 and the image shot by the back camera 2 (or by the side camera 2x) are superposed by the superposing module 14 when needed and are displayed in the window screen of the monitor 8. The image display of the images shot by the back camera 2 and the side camera 2x are adjusted by the display adjusting means VA. The adjusting is exemplified in detail later with reference to FIGS. 16 and 18. As described above, the three-dimensional coordinate estimating means TD, the first and second information combining means CB1 and CB2, the specific view creating means SV1 and SV2, and the display adjusting means VA are configured with the CPU 11, the image recognizing module 12, and the graphics drawing module 13.

As described above, when the vehicle 1 is moved from the first state to the second state, the feature point tracking means FP detects the coordinate of the feature point in the image shot at the first state by the back camera 2 (or by the side camera 2x) and also detects the coordinate, which corresponds to the feature point, in the image shot at the second state. The moving condition detecting means MC detects the positions and postures of the movable body at least at the first and second states, respectively. In the foregoing manner, the three-dimensional coordinate estimating means TD reconstructs a three-dimensional shape based upon the positions and postures of the movable body at the first and second states, the coordinate of the feature point in the image shot at the first state, and the coordinate, which corresponds to the feature point, in the image shot at the second state, wherein a three-dimensional coordinate of the feature point can be obtained.

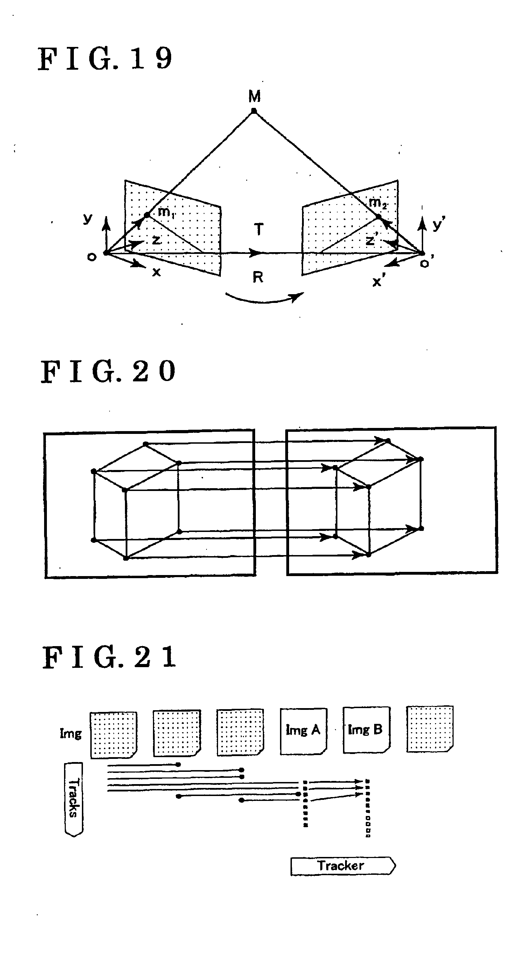

The above-described reconstruction of the three-dimensional shape is carried out based upon the principles of triangulation by use of images as disclosed for example in the aforementioned nonpatent document 2, and are described hereinafter with reference to FIGS. 19 through 21. As illustrated in FIG. 19, when observing an identical point M in the space at least from two camera positions, as shown as o and o' on the left and right sides in FIG.19, light rays in the air connecting the optical center of the camera and points $m_1$ and $m_2$ observed in the images shot by the respective cameras can be determined. An intersecting point of both light rays represents the point M in the space. In this case, the three-dimensional point M in a scene of interest needs to be identified between the images.

In the meantime, when the three-dimensional shape is reconstructed by use of a single camera, it is necessary to extract the feature points of an object of interest in the images and to track those feature points. Further, it is one of the conditions for reconstructing the three-dimensional shape that internal parameters (e.g. a scale factor, and an optical axis position coordinate) of the camera, and external parameters (e.g. position and posture with respect to the camera of the vehicle) are required to be well known and to have been calibrated in advance.

In order to restore the three-dimensional shape depending on the shift of the scene of interest, a corresponding stereo can be applied to determine at which position and posture of the camera each time-serial image was photographed, as far as the correspondences have been calibrated by a dead-reckoning system. However, it is necessary to identify the corresponding points in the time-serial images which are shot by the camera so as to contain the identical points, thereby enabling to reconstruct the three-dimensional shape in the scene of interest.

Detection of the feature point in the scene of interest can be carried out by detecting some feature points which characterize the object in the scene of interest. The feature points in this case correspond to points possessing appropriate characteristics which are traceable along with the processing sequence of the image. An automatic correlation shown as formula 1 discussed below can be applied for detecting the feature points. A matrix A functions to average derivatives of the image signal included in a window region W containing a point p(x, y) in the image. Thus, an optimal feature point can be obtained by using the matrix A. That is, the feature point suitable for the tracking generally corresponds to a corner and an intersecting point of lines (e.g., a block dot at a corner of the left side of the drawing in Fig. 20) and the matrix A detects this sort of feature point. According to formula 1 below, I(x, y) shows a function of the image, $I_x$ shows a gradient of the image relative to an x-axis, $I_y$ shows a gradient of the image relative to a y-axis, and $(x_k, y_k)$ shows an image point in the window W having (x, y) as a centre of the image.

[Formula 1]

$$A(x,y) = \begin{bmatrix} \sum_W (I_x(x_k, y_k))^2 & \sum_W (I_x(x_k, y_k) I_y(x_k, y_k)) \\ \sum_W (I_x(x_k, y_k) I_y(x_k, y_k)) & \sum_W (I_y(x_k, y_k))^2 \end{bmatrix}$$

An Image sequence I (u, t) having a coordinate of an image point at $u=[x, y]^T$ is considered for feature tracking. Presuming that the brightness of the image does not change after elapsing a minute time when a sample cycle is sufficiently short, formula 2 is obtained.

[Formula 2]

$$I(u, t) = I(\delta(u), t + \tau)$$

With the formula 2, $\delta(u)$ represents a motion field (i.e., projection of a three-dimensional motion vector to the image). Because the sample cycle is sufficiently short, as shown in a formula 3, the motion or the shift of the image can be approximated using only a translation element out of the motion elements including a rotation element and the translation element. "d" in the formula 3 represents a displacement vector.

[Formula 3]

$$\delta (u) = u + d$$

In order to calculate the corresponding displacement vector d relative to each selected feature point and each tracked pair of points in the image sequence, a tracker is applied. In practice, because the motion model of the image cannot be recovered perfectly due to the influence of the noise, the above formula 2 does not function sufficiently. Accordingly, as shown in formula 4, the displacement vector d may be calculated by a sum of square difference. The displacement vector d, which minimizes a residual of the formula 4, is obtained and the feature points are tracked in the direction of the displacement vector d as illuctrated in FIG. 20. "W" of the formula 4 represents a window for detecting the feature points with reference to the point u.

[Formula 4]

$$\varepsilon = \sum_{W} \left[ I(\mathbf{u} + \mathbf{d}, t + \tau) - I(\mathbf{u}, t) \right]^2$$

As illustrated in FIG. 21, a tracks is a set of points characterising an identical object among the image sequences. Image points of each track correspond to projections of respective three-dimensional points. Although the tracks of an image sequence should not be lost, the tracking has to be stopped when the tracking points cannot be detected because the points to be tracked are out of the image or are hidden, or due to noise. Hereinafter, starting from a set of the feature points detected in a first image, the feature points of the previous image, i.e., Img A in Fig. 21, are tracked in the next image, i.e., Img B in Fig. 21. In case that some of the feature points in the Img A are not tracked in the Img B, new feature points are searched in the Img B and the new feature points are referred to as starting points for the tracking thereafter.

When a distance between the position M and the camera position in the three-dimensional space is z, formula 5 is obtained with the projection at a position m in the image. With the formula 5, a distance f is referred to as a focal length. Hereinafter, the distance f is defined with a unit length at 1 so as to simplify the formula 5. In the foregoing manner, a geometric relation for shooting the feature point in the space, such as a peak point of an object, by use of two cameras can be described as illustrated in FIG. 19.

[Formula 5]

$$M = \frac{Z}{f} m \qquad M = Zm$$

As illustrated in FIG. 19, the second camera coordinate system can be produced by giving rotation matrix R and translation vector T to the first camera coordinate system with a central focus on the original viewpoint o. The translation vector T is referred to as a baseline vector. The parameters, {T, R} depict a relative positional and postural relationship between these two camera viewpoints. Therefore, when the object is photographed by a single camera, the camera movement such as translation and rotation can be measured by the dead reckoning system.

Further, as illustrated in FIG. 24, the projections of the position M in the three-dimensional space are assumed to be positioned at the coordinates $m_1$ and $m_2$ in each image. The direction of the feature point from the viewpoint o' of the second camera coordinate system is depicted with a vector $m_2$ with respect to the second camera coordinate. However, the second camera coordinate was produced by giving rotation matrix R to the first camera coordinate system. Therefore, the direction of the feature point from the viewpoint o' is depicted with $Rm_2$ with respect to the first camera coordinate system, wherein formula 6 is obtained.

[Formula 6]

$$Zm_1 = T + Z'Rm_2$$

The aforementioned distances Z and Z' are calculated in accordance with a formula 7.

[Formula 7]

$$Z = \frac{(T \times Rm_2, m \times Rm_2)}{\|m_1 \times Rm_2\|^2}, \qquad Z' = \frac{(T \times m_1, m_1 \times Rm_2)}{\|m_1 \times Rm_2\|^2}$$

As described above, the distances Z and Z' in the three-dimensional space can be restored depending on the coordinates $m_1$ and $m_2$ of the projections onto the respective images from the two different camera viewpoints. The aforementioned track is the set of points in the objective view. Therefore, the three-dimensional shape can be restored based upon the calculation in accordance with the formula 7 regarding all tracks.

As shown in FIG. 1, the dead reckoning system as the moving condition detecting means MC for detecting the moving state of the vehicle can be configured with at least one sensor for detecting the vehicle dynamic state such as the vehicle running speed, the steering condition, the vehicle turning condition and the like. According to the embodiment of the present invention, the dead reckoning system can be configured with the vehicle wheel speed sensor 7 and can be applied as the movable body information detecting means MB. In the foregoing manner, the object existing in the imaged region can be specified based upon the vehicle positions and postures at the first and second conditions, and the corresponding points identified between the specified images by extracting and tracking the feature points in the images shot by the back camera 2 (or by the side camera 2x) at the first and second conditions, wherein the three-dimensional coordinate in the imaged region can be estimated.

According to the embodiment of the present invention, the dead-reckoning system is constructed for detecting the vehicle state, i.e. the position and the direction (i.e., angle about the vertical axis) of the vehicle 1, based on the wheel speed signals detected by the vehicle wheel speed sensors 7. The movable body information detecting means MB is configured with the dead reckoning system.

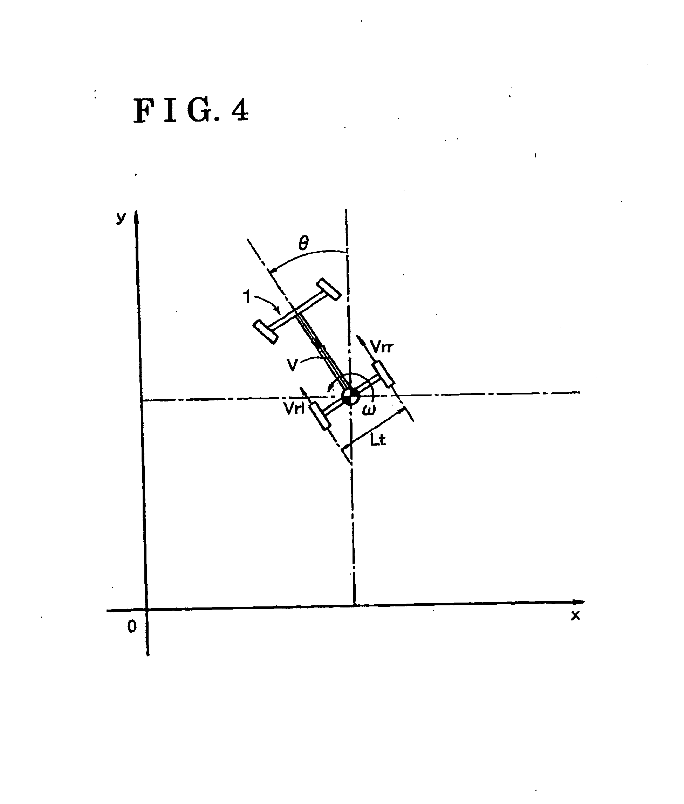

Next, the following description will be given for explaining a method of detecting the condition of the vehicle 1 according to the embodiment of the present invention. As illustrated in FIG. 4, the position and the direction of the vehicle 1 may be defined with three variables $(x, y, \theta)$. When the vehicle speed is defined as a vehicle speed V and the angular velocity of the vehicle 1 is defined as an angular velocity $\omega$, the following formula is established between the vehicle state, the vehicle speed, and the angular velocity. That is:

$$dx/dt = V \cdot \cos\theta,$$

$$dy/dt = V \cdot \sin\theta,$$

and

$$d\theta/dt = \omega.$$

Although the vehicle speed V and the angular velocity $\omega$ cannot be directly measured, these values can be determined using the wheel speed of the rear wheels on the right and left detected by the wheel speed sensors as follows. That is:

$$V = (Vrr + Vrl) / 2,$$

and

$$\omega = (Vrr - Vrl) / Lt,$$

wherein Vrr stands for the wheel speed of the rear right wheel and Vrl stands for the wheel speed of the rear left wheel, and Lt stands for a tread length of the vehicle.

According to the foregoing formulas, the vehicle state $(x, y, \theta)$ at a time t can be shown in the following manner when an initial value $(x_0, y_0, \theta_0)$ when t equals to zero is determined.

$$x = x_0 + \int (dx / dt) dt$$

wherein $\int$ is varied from t equal to zero to t equal to t (i.e., t =0 → t=t)

$$y = y_0 + \int (dy / dt) dt$$

wherein $\int$ is varied from t equal to zero to t equal to t (i.e., t =0 → t=t)

$$\theta = \theta_0 + \int (d\theta / dt) dt$$

wherein $\int$ is varied from t equal to zero to t equal to t (i.e., t =0 → t=t)

That is, the vehicle state $(x, y, \theta)$ will be determined as shown in a formula 8.

[Formula 8]

$$x = x_0 + \int_{t=0}^{t} \dot{x} dt$$

$$y = y_0 + \int_{t=0}^{t} \dot{y} dt$$

$$\theta = \theta_0 + \int_{t=0}^{t} \dot{\theta} dt$$

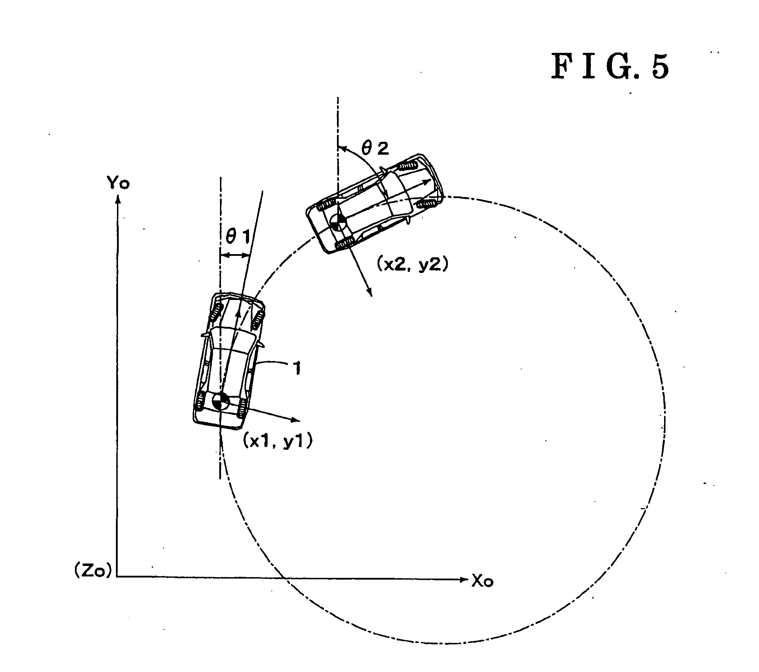

FIG. 5 shows the condition of the vehicle performing a turning movement on $X_0$-$Y_0$ plane (i.e., $Z_0$=0) in the three-dimensional coordinates $(X_0, Y_0, Z_0)$. The positional relationship between a first vehicle condition determined by a first position (i.e., coordinates $(x_1, y_1)$) and a first direction (i.e., angle $\theta_1$) and a second vehicle condition determined by a second position (i.e., coordinates $(x_2, y_2)$) and a second direction (i.e., angle $\theta_2$) can thus be determined. Although the vehicle position (i.e., coordinates) and the direction (i.e., angle) are detected based on the detected wheel speed by the wheel speed sensors 7 for the rear wheels on the right and left, the position and direction of the vehicle 1 may be determined by use of the steering angle sensor 4, a yaw rate sensor (not shown), a distance sensor (not shown), or combinations of those. Although FIG. 5 shows the plain circle turning movement of the vehicle 1, the vehicle movement can be tracked in accordance with combination of plural arcs or direct lines based upon the above-described coordinates and directions of the vehicle 1.

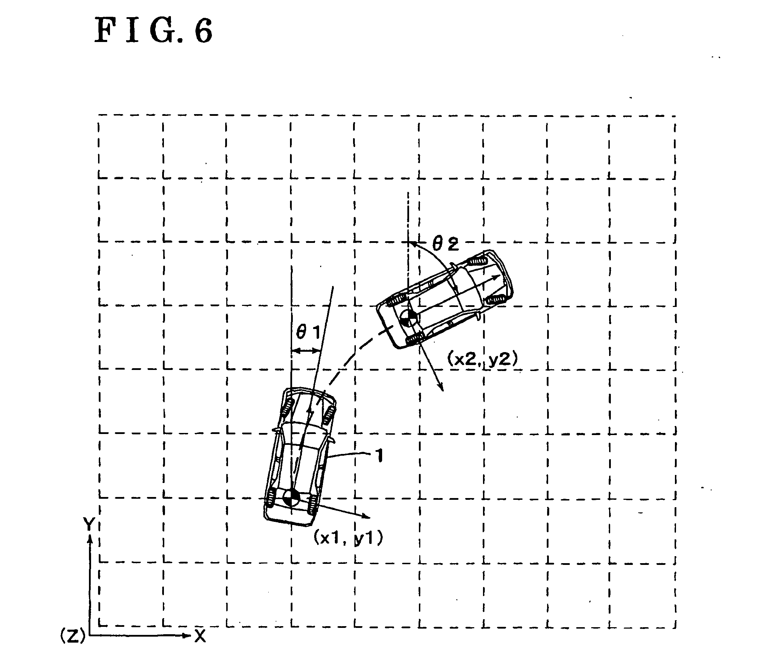

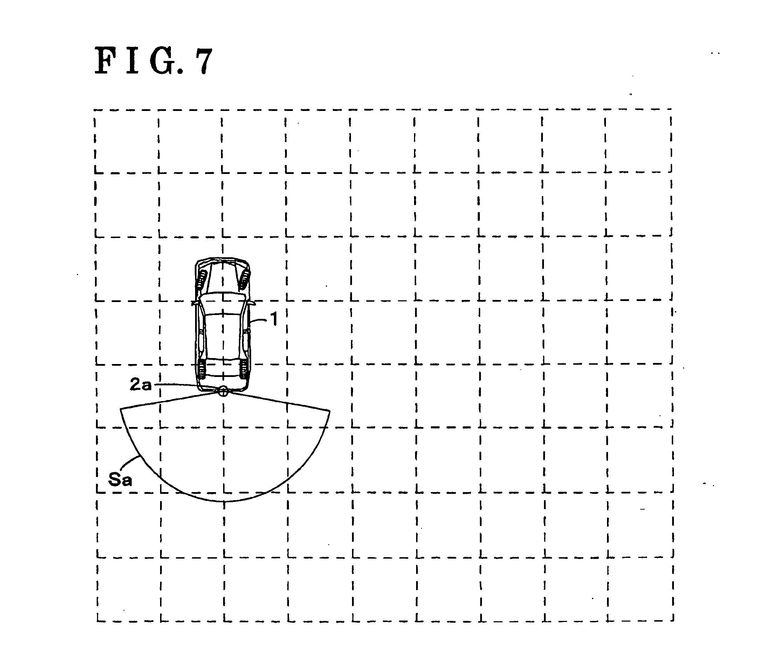

Meanwhile, as illustrated in FIG. 6, the three-dimensional environment estimated by the three-dimensional coordinate estimating means TD is stored in a memory as a three-dimensional map denoted with broken lines with reference to the three-dimensional coordinates (X, Y, Z). There are the other vehicles which are not the own vehicle, the obstacles, the buildings all of which are shot by the back camera 2 and the rear camera 2x, and the like in the three-dimensional map. However, their illustrations are omitted. Three-dimensional maps are denoted with broke lines in FIGS. 7 through 11 as well. The three-dimensional coordinate in FIG. 5 is corresponded relative to the three-dimensional map. That is, the relative positional and postural relationship of the vehicle 1 to the surrounding environment is corrected by the first information combining means CB1 (or the second information combining means CB2). More particularly, the vehicle 1 illustrated in FIG. 5 is positioned in the three-dimensional map denoted with the broken lines in FIG. 6. Therefore, the position (coordinate) of the vehicle 1 and the posture, i.e. the direction (angle) of the vehicle 1 are specified in the three-dimensional map.

The specified view is created by the specified view creating means SV1 (or SV2) when a camera is assumed to have been oriented in a predetermined direction on the vehicle 1 positioned at a predetermined point in the third-dimensional environment containing the environment around the vehicle 1. An image of the view shot by this virtual camera is displayed in the monitor 8 as the displaying means VD1 (or VD2). FIG. 7 shows which region is contained in a view shot by the virtual camera 2a in accordance with the third-dimensional map with the vehicle 1 after moving. In other words, a region denoted with Sa in FIG. 7 is contained in the view shot by the virtual camera 2a and is displayed as a virtual image in the monitor 8. Hereinafter, the region displayed in the monitor 8 is referred to as a displayed view.

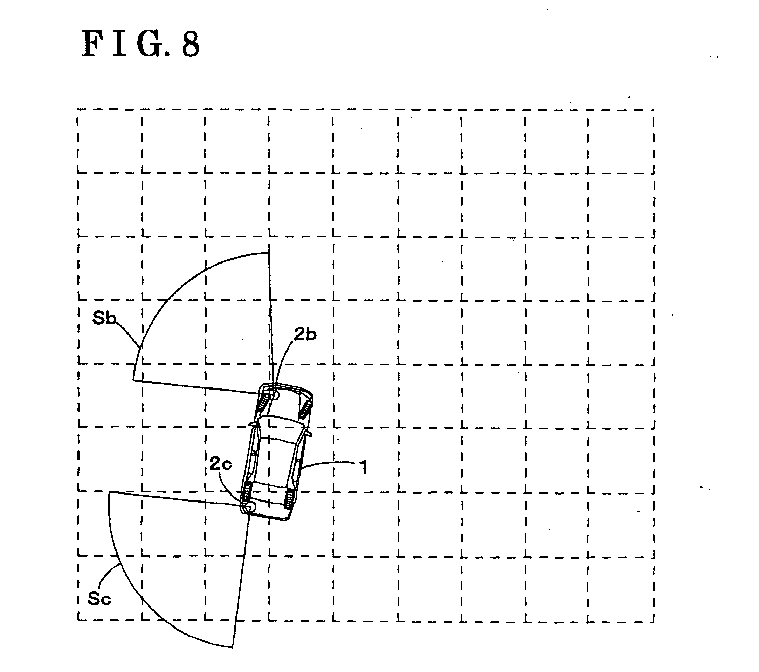

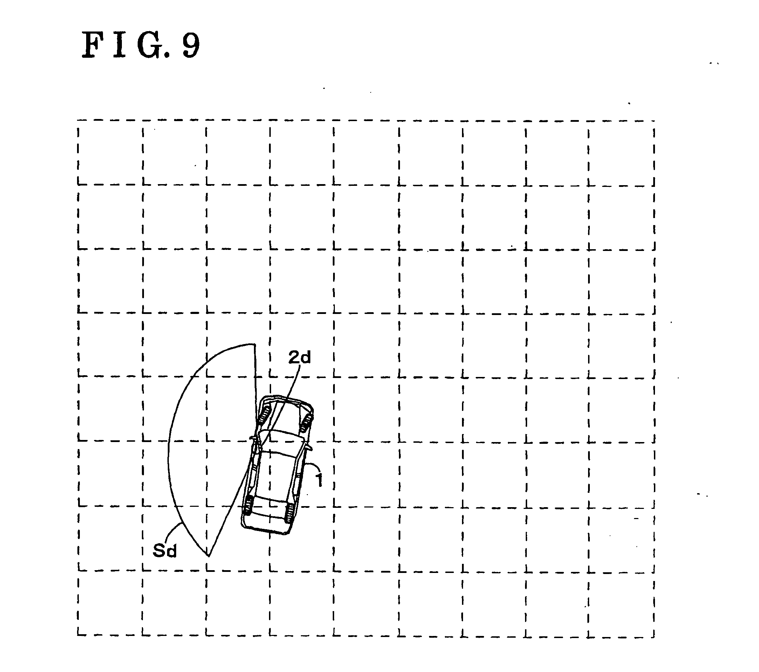

FIG. 8 shows displayed views Sb and Sc contained in views shot by a virtual camera 2b mounted at a front left corner of the vehicle 1 and by a virtual camera 2c mounted at a rear left corner thereof in accordance with the third-dimensional map with the vehicle 1 after moving. In the same manner, FIG. 9 shows a displayed view Sd contained in a view shot by a virtual camera 2d in accordance with the third-dimensional map with the vehicle 1 after moving.

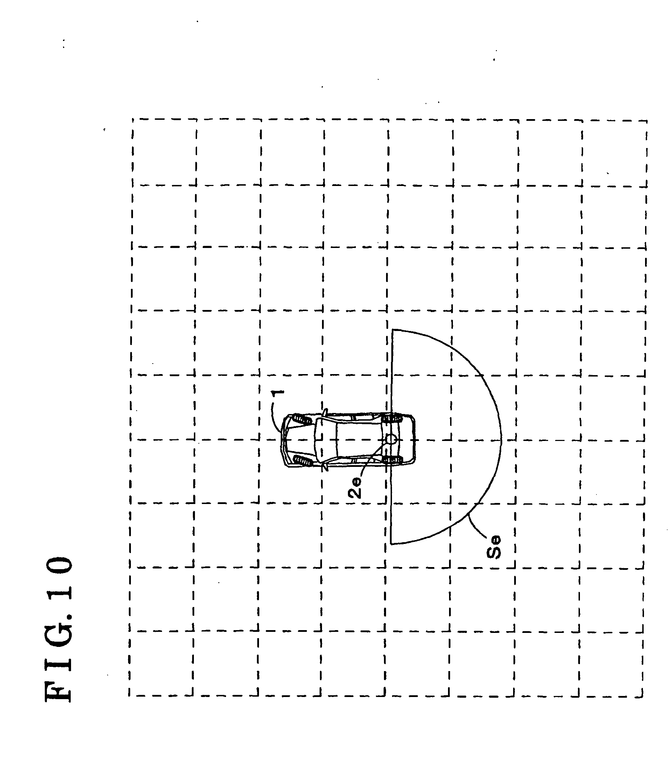

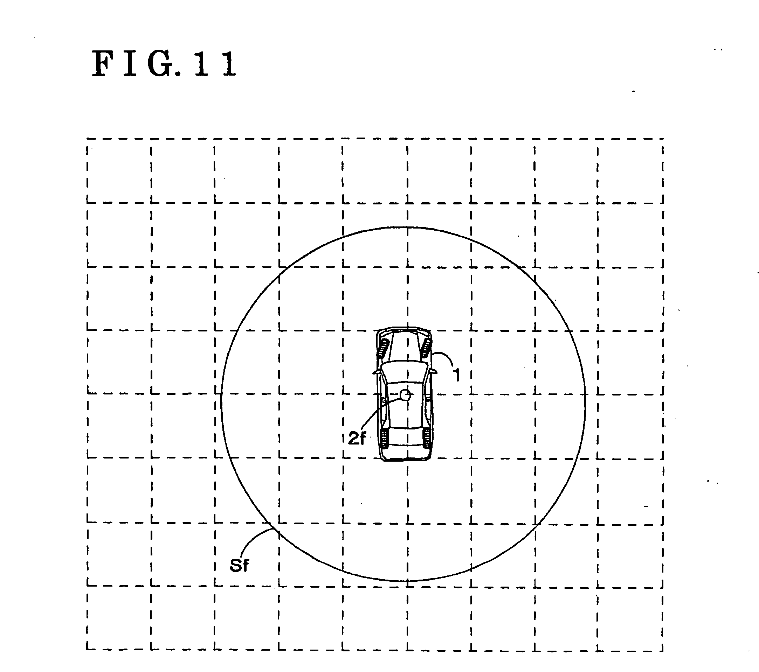

The angles photographed by the virtual cameras illustrated in FIGS. 7, 8, and 9 are designed to be substantially similar to the angle shot by the actual back camera 2 or by the side camera 2x. Alternatively, as illustrated in FIG. 10, a virtual camera 2e can be mounted on the vehicle 1 so as to set a displayed view Se at 180 degrees. Therefore, the monitor 8 can display a virtual image which also contains views around the left and right corners which can not be shot by the actual back camera 2. Further, as illustrated in FIG. 11, a virtual camera 2f can be mounted above the vehicle 1 so as to set a displayed view Sf at 360 degrees. The monitor 8 can display a virtual image containing this view shot by the virtual camera 2f.

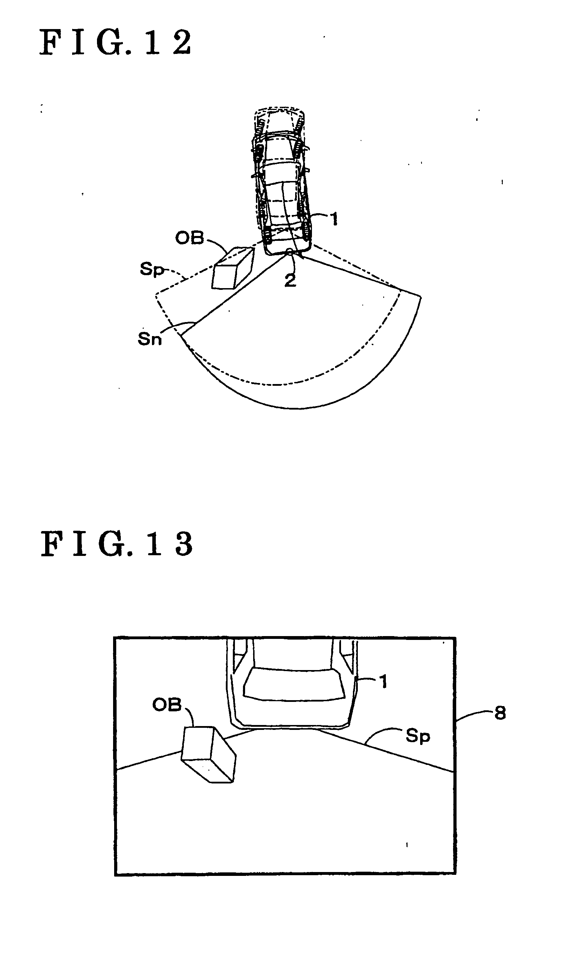

The above-described virtual image varies depending on the movement of the vehicle 1, i.e. depending on shifting of the view in response to the movement of the virtual cameras. According to the embodiment of the present invention, the monitor 8 can display a virtual image containing the obstacle shot during the vehicle movement when needed. For example, as illustrated in FIG. 12, when the vehicle 1 only with the back camera 2 is located at a position denoted with double dashed lines, the obstacle OB appears in a region Sp denoted with double dashed lines, wherein the monitor 8 displays an image containing the obstacle OB. Once the vehicle 1 is moved from the aforementioned position in an arrow direction down to a position denoted with a solid line, the obstacle OB disappears in a region Sn denoted with a solid line, wherein the displayed image in the monitor 8 does not contain the obstacle OB. In response to further movement of the vehicle 1 in the arrow direction from the position denoted with the solid line, the obstacle OB approaches to a portion between the rear left corner of the vehicle 1 and the front left thereof. In this case, the obstacle OB deviates from a view which can be displayed by the monitor 8.

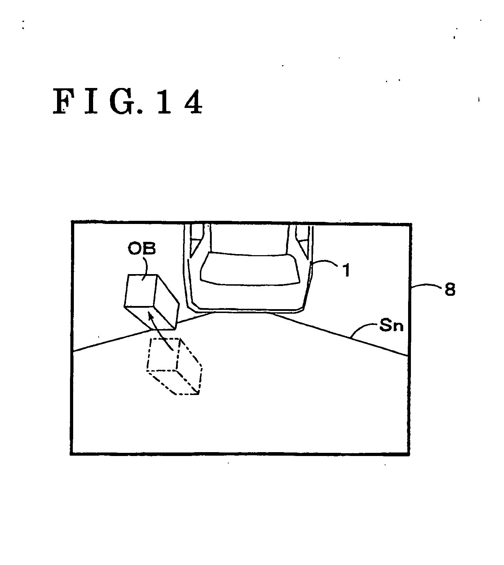

Under the above-described condition between the vehicle 1 and the obstacle OB, if the virtual view shot by the virtual camera 2e above the vehicle 1 is displayed in the monitor 8, the displayed image can contain both corners of the vehicle 1 as illustrated in FIGS. 13 and 14. As illustrated in FIG. 14, a relative position of the obstacle OB to the vehicle 1 is shifted in an arrow direction illustrated in FIG. 14 from the position denoted with the double dashed lines. The obstacle OB is then illustrated with a solid line. As described above, even if the obstacle OB deviates from an actual view shot by the actual camera 2, the driver can recognize the position of the obstacle OB through the screen of the monitor 8.

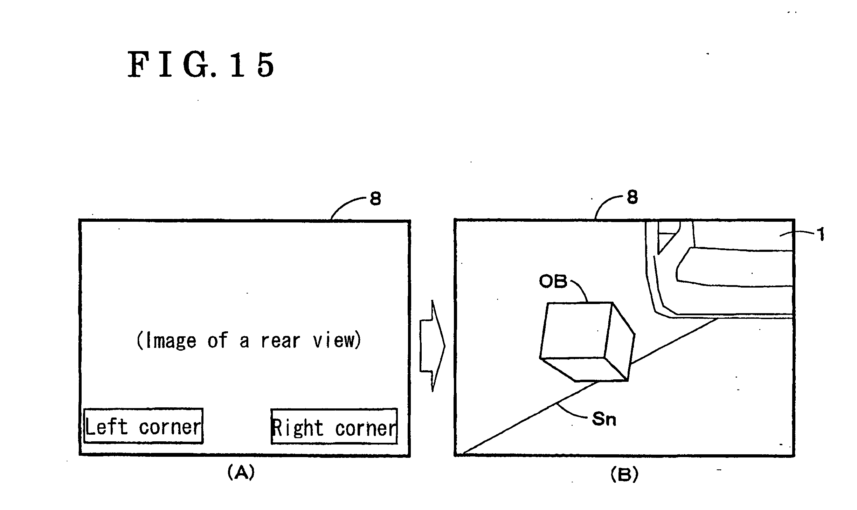

According to the embodiment of the present invention, the displayed image in the monitor 8 is switched from the image shot by the actual back camera 2 to the virtual images illustrated in FIGS. 13 and 14. More particularly, as illustrated in FIG. 15, the monitor 8 possesses a displayed screen (A) which shows not only the image (not shown) of the rear view of the vehicle 1 but also touch panel switches indicating "Left corner" and "Right corner". For example, when the driver or user touches the touch panel switch indicating "Left corner" shown in the displayed screen (A), the displayed screen (A) is switched to a screen (B) which zooms the left corner of the vehicle 1 in, the virtual image. In this case, the driver can easily recognize the obstacle OB approaching to the left corner of the vehicle 1. As described above, it is preferable that the portion of the vehicle 1 is zoomed in the monitor 8 as the driver intends. Alternatively, the display illustrated in FIG. 13 can be moved from side to side or can be auditorily warned about the obstacle OB approaching to the vehicle 1.

As illustrated in FIG. 12, the obstacle OB exists in the region Sp before the rear movement of the vehicle 1, wherein the monitor 8 displays the image containing the obstacle OB. Once the vehicle 1 moves rearward, the obstacle OB does not exist in the region Sn, wherein the obstacle OB disappears from the screen in the monitor 8. FIGS. 13 and 14 illustrate the displayed images in the monitor 8 under the above conditions, respectively. In the meantime, as illustrated in FIG. 16, when the vehicle 1 moves forward from the state where the obstacle OB exists along the side of the vehicle 1, the obstacle OB, which did not first appear in the view captured by the camera 2, i.e. in the region Sp denoted with double dashed lines, appears in the region Sn along the forward movement of the vehicle 1 and suddenly appears adjacent to the vehicle 1. This sort of condition can not be coped with as far as the environment around the vehicle 1 has been monitored only by the back camera 1 as illustrated in FIG. 12.

Therefore, according to the embodiment of the present invention, in order to deal with the condition illustrated in FIG. 16, the virtual image generated when the virtual camera 2e is located above the vehicle 1 illustrated in FIG. 10 can be displayed in the monitor 8. At the same time, the vehicle 1 is mounted with the side camera 2x in addition to the back camera 2, wherein the two view are combined so as to be displayed as a virtual image in the monitor 8. For example, as illustrated in FIG. 16, the obstacle at the side of the vehicle 1 is included in the view captured by the side camera 2x, which is denoted with broken lines, wherein the obstacle OB can be displayed as the virtual image in the monitor 8 as illustrated in FIG. 17.

That is, each image illustrated in FIG. 17 and 18 is produced by combining the direct view captured by the back camera 2 and the combined view by the side camera 2x. A portion of the image including the second specified view by the side camera 2x, which does not overlap the image including the first specified view by the back camera 2, is adjusted to be displayed and overlapped in the image of the monitor 8. As illustrated in FIG. 18, the obstacle OB in the combined view illustrated in FIG. 17 is relatively shifted to the direct view illustrated in FIG. 18. Therefore, the driver can recognize the position of the obstacle OB since when the obstacle OB exists at the side of the vehicle 1. Further, even if the obstacle OB is in a blind corner of the side camera 2x or the back camera 2 before the vehicle movement, the blind corner can be displayed as the virtual image by using cameras such as the camera 2 and the side cameras 2z together.

According to the embodiment of the present invention, the vehicle 1 is mounted with the back camera 1 and the side camera 2x. Alternatively, the present invention is not limited to the above-described embodiment, and for example a front camera can be used instead. Further, the two cameras are utilized for monitoring the position of the obstacle. Alternatively, the three-dimensional environment map can be created by use of three cameras or more than that.

A movable body circumstance monitoring apparatus includes first and second environment information detecting means for detecting and storing information about an environment surrounding a movable body, movable body information detecting means for detecting and storing position and posture of the movable body, first and second information combining means for combining the information detected by the movable body information detecting means and the information detected by the first and second environment information detecting means, correcting a positional and postural relationship of the movable body relative to the environment surrounding the movable body, and outputting the relationship, first and second specific view creating means for creating a first specific view of the movable body with reference to information of an environment surrounding the movable body at a first specific position based upon the information outputted from the first and second information combining means, first and second displaying means for displaying the first and second specific view created by the first and second specific view creating means as images, and display adjusting means for adjusting at least a portion of the second specific view displayed by the second displaying means to overlap the first specific view displayed by the first displaying means.

**Claims**

1.  A movable body circumstance monitoring apparatus **characterized in that** the apparatus comprises:

    first environment information detecting means (EI1) for detecting and storing information about an environment surrounding a movable body;
    movable body information detecting means (MB) for detecting and storing position and posture of the movable body;
    first information combining means (CB1) for combining the information detected by the movable body information detecting means (MB) and the information detected by the first environment information detecting means (EI1), correcting a positional and postural relationship of the movable body relative to the environment surrounding the movable body, and outputting the relationship;
    first specific view creating means (SV1) for creating a first specific view of the movable body with reference to information of an environment surrounding the movable body at a first specific position based upon the information outputted from the first information combining means (CB1);
    first displaying means (VD1) for displaying the first specific view created by the first specific view creating means (SV1) as an image;
    second environment information detecting means (EI2) for detecting and storing information about an envi-

ronment surrounding the movable body;

second information combining means (CB2) for combining the information detected by the movable body information detecting means (MB) and the information detected by the second environment information detecting means (EI2), correcting a positional and postural relationship of the movable body relative to the environment surrounding the movable body, and outputting the relationship;

second specific view creating means (SV2) for creating a second specific view of the movable body with reference to information of an environment surrounding the movable body at a second specific position based upon the information outputted from the second information combining means (CB2);

second displaying means (VD2) for displaying the second specific view created by the second specific view creating means (SV2) as an image; and

display adjusting means (VA) for adjusting at least a portion of the second specific view displayed by the second displaying means (VD2) to overlap the first specific view displayed by the first displaying means (VD1).

2. A movable body circumstance monitoring apparatus **characterized in that** the apparatus comprises:

first environment information detecting means (EI1) for detecting and storing information about an environment surrounding a movable body;

movable body information detecting means (MB) for detecting and storing position and posture of the movable body;

first information combining means (CB1) for combining the information detected by the movable body information detecting means (MB) and the information detected by the first environment information detecting means (EI1), correcting a positional and postural relationship of the movable body relative to the environment surrounding the movable body, and outputting the relationship;

first specific view creating means (SV1) for creating a first specific view of the movable body with reference to information of an environment near a first specific portion of the movable body based upon the information outputted from the first information combining means (CB1);

first displaying means (VD1) for displaying the first specific view created by the first specific view creating means (SV1) as an image;

second environment information detecting means (EI2) for detecting and storing information about an environment surrounding the movable body;

second information combining means (CB2) for combining the information detected by the movable body information detecting means (MB) and the information detected by the second environment information detecting means (EI2), correcting a positional and postural relationship of the movable body relative to the environment surrounding the movable body, and outputting the relationship;

second specific view creating means (SV2) for creating a second specific view of the movable body with reference to information of an environment near a second specific portion of the movable body based upon the information outputted from the second information combining means (CB2);

second displaying means (VD2) for displaying the second specific view created by the second specific view creating means (SV2) as an image; and

display adjusting means (VA) for adjusting at least a portion of the second specific view displayed by the second displaying means (VD2) to overlap the first specific view displayed by the first displaying means (VD1).

3. A movable body circumstance monitoring apparatus according to claim 1 or 2, wherein the portion of the second specific view does not overlap the first specific view prior to being adjusted by the display adjusting means (VA).

4. A movable body circumstance monitoring apparatus according to claim 3, wherein the first and second environment information detecting means (EI1, EI2) respectively include:

image capturing means (IC1, IC2) mounted on the movable body for obtaining images of the surrounding of the movable body and for outputting information of an image, the image capturing means (IC1, IC2) obtaining a first image at least at a first state of the movable body and obtaining a second image at least at a second state thereof when the movable body move from the first state to the second state;

a feature point tracking means (FP) for detecting a coordinate of a feature point in the first image at the first state of the movable body and for detecting a coordinate, which corresponds to the feature point, in the second image at the second state thereof;

a moving condition detecting means (MC) for detecting the position and posture of the movable body at least at the first and second states; and

a three-dimensional coordinate estimating means (TD) for estimating a three-dimensional coordinate of the feature point based upon the position and posture of the movable body at the first and second states detected by the moving condition detecting means (MC), the coordinate of the feature point in the image at the first state of the movable body, and the coordinate, which corresponds to the feature point, in the image shot at the second state.

5. A movable body circumstance monitoring apparatus according to claim 4, wherein the moving condition detecting means (MC) of each first and second environment information detecting means (EI1, EI2) detects the position and posture of the movable body at the fist and second states based upon the information detected by the movable body information detecting means (MB).

6. A movable body circumstance monitoring apparatus according to any preceding claim, wherein the image capturing means (IC1) of the first environment information detecting means (SR1) is a first camera mounted on a portion of the movable body for photographing the surrounding of the movable body.

7. A movable body circumstance monitoring apparatus according to claim 6, wherein the image capturing means (IC2) of the second environment information detecting means (SR2) is a second camera mounted at a different portion of the movable body for photographing a surrounding of the movable body which is not photographed by the first camera.

# F I G. 1

# FIG. 2

# FIG. 3

EP 1 405 776 A1

# FIG. 4

EP 1 405 776 A1

# FIG. 6

EP 1 405 776 A1

FIG. 7

# FIG. 8

EP 1 405 776 A1

# FIG. 9

FIG.10

FIG.11

# FIG.12

# FIG.13

# FIG. 14

**F I G. 1 5**

# FIG. 16

# FIG. 17

# FIG. 18

# F I G. 1 9

# F I G. 2 0

# F I G. 2 1

**European Patent Office**

**EUROPEAN SEARCH REPORT**

Application Number

EP 03 02 1999

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 094 337 A (MATSUSHITA ELECTRIC IND CO LTD) 25 April 2001 (2001-04-25) * abstract; figure 12 * * paragraphs [0002]-[0005] * --- | 1-7 | B60R21/32 B60Q1/48 |
| A | EP 1 005 234 A (MATSUSHITA ELECTRIC IND CO LTD) 31 May 2000 (2000-05-31) * abstract; figures 7A-C * * paragraphs [0002]-[0005] * --- | | |
| X | EP 1 167 120 A (MATSUSHITA ELECTRIC IND CO LTD) 2 January 2002 (2002-01-02) * abstract; figures 1,5-7 * * paragraphs [0012]-[0044] * --- | 1-7 | |
| A | DE 100 33 599 A (HONDA MOTOR CO LTD) 1 February 2001 (2001-02-01) * abstract; figures 1-11 * ----- | 1-7 | |

TECHNICAL FIELDS SEARCHED (Int.Cl.7)

B60Q

The present search report has been drawn up for all claims

| Place of search | Date of completion of the search | Examiner |
|---|---|---|
| MUNICH | 12 December 2003 | Geuss, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 02 1999

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2003

| Patent document cited in search report | | | Publication date | Patent family member(s) | | Publication date |
|---|---|---|---|---|---|---|
| EP 1094337 | A | | 25-04-2001 | EP 1094337 A2 | | 25-04-2001 |
| | | | | JP 2001187553 A | | 10-07-2001 |
| | | | | US 6483429 B1 | | 19-11-2002 |
| EP 1005234 | A | | 31-05-2000 | JP 2000161915 A | | 16-06-2000 |
| | | | | CN 1255624 A | | 07-06-2000 |
| | | | | EP 1005234 A2 | | 31-05-2000 |
| | | | | US 6172601 B1 | | 09-01-2001 |
| EP 1167120 | A | | 02-01-2002 | EP 1167120 A2 | | 02-01-2002 |
| | | | | JP 2002087191 A | | 26-03-2002 |
| | | | | US 6366221 B1 | | 02-04-2002 |
| DE 10033599 | A | | 01-02-2001 | DE 10033599 A1 | | 01-02-2001 |
| | | | | JP 2001084497 A | | 30-03-2001 |
| | | | | US 6531959 B1 | | 11-03-2003 |

EPO FORM P0459

For more details about this annex : see Official Journal of the European Patent Office, No. 12/82